# EUROPÄISCHE PATENTSCHRIFT

(11) **EP 1 218 309 B1**
(45) Veröffentlichungstag und Bekanntmachung des Hinweises auf die Patenterteilung: **16.11.2005**
(21) Anmeldenummer: 00963946.9
(22) Anmeldetag: 31.08.2000
(51) Int. Cl.: C04B 33/26, H01B 3/12

(54) **VERFAHREN ZUR HERSTELLUNG EINES PORZELLANS, PORZELLAN SOWIE KERAMISCHER ISOLATOR AUS EINEM PORZELLAN**
METHOD FOR PRODUCING A PORCELAIN, PORCELAIN AND CERAMIC ISOLATOR THAT CONSISTS OF SAID PORCELAIN
PROCEDE DE FABRICATION D'UNE PORCELAINE, PORCELAINE AINSI FABRIQUEE, AINSI QU'ISOLATEUR EN CERAMIQUE CONSTITUE DE LADITE PORCELAINE

(30) Priorität: 03.09.1999 DE 19942137
(43) Veröffentlichungstag der Anmeldung: 03.07.2002
(73) Patentinhaber: Liebermann, Dr.-Ing., Johannes, 96215 Lichtenfels (DE)
(72) Erfinder: Liebermann, Dr.-Ing., Johannes, 96215 Lichtenfels (DE)
(74) Vertreter: Tergau & Pohl Patentanwälte
(86) Internationale Anmeldenummer: PCT/DE2000/002973
(87) Internationale Veröffentlichungsnummer: WO 2001/017925

(56) Entgegenhaltungen:
- EP-A- 0 189 260
- EP-A- 0 522 343

## Beschreibung

Die Erfindung betrifft ein Verfahren zur Herstellung eines Porzellans, insbesondere für Anwendungen in der elektrischen Isoliertechnik, wobei Bauxit als Ausgangsmaterial verwendet wird. Im Folgenden wird ein solches Porzellan auch als Bauxit-Porzellan bezeichnet. Die Erfindung betrifft weiter ein Bauxit-Porzellan sowie einen keramischen Isolator aus dem Porzellan.

Als technische Keramik für den Einsatz in der elektrischen Isoliertechnik wird heute üblicherweise Tonerde-Porzellan verwendet. Unter einem Tonerde-Porzellan wird hierbei eine gesinterte Mischung von Tonerde, Ton, Kaolin, Feldspat sowie gegebenenfalls Sinterhilfsmitteln und Flußmitteln verstanden. Dabei bezeichnet Tonerde hochreines Aluminiumoxid und wird nach dem Bayer-Verfahren in aufwendiger Art und Weise aus dem Rohstoff Bauxit gewonnen. Tonerde darf insbesondere nicht mit Ton verwechselt werden, worunter üblicherweise das an sekundärer Lagerstätte abgelagerte Verwitterungsprodukt von feldspathaltigen Gesteinen verstanden wird. Kaolin wiederum bezeichnet das an primärer Lagerstätte verbliebene Verwitterungsprodukt von feldspathaltigen Gesteinen.

Insbesondere für festigkeitsbeanspruchte Hochspannungsisolatoren werden Tonerde-Porzellane eingesetzt, die eine hohe Zugfestigkeit, Biegefestigkeit und Innendruckfestigkeit aufweisen. Hochfeste Tonerde-Porzellane weisen dabei Biegefestigkeiten, gemessen an einem genormten, glasierten Biegestab aus dem Tonerde-Porzellan von über 170 N/mm² auf . Je nach gewünschter Biegefestigkeit bewegt sich hierbei die Menge an einzubringender Tonerde zwischen 27 und 55 Gew.-%, wobei die Festigkeit mit steigendem Tonerde-Anteil zunimmt.

Hochfeste Tonerde-Porzellane sind beispielsweise aus der EP 0 189 260 A3, der GB 2056431 A, der US 4, 183, 760 und der EP 0 522 343 B1 bekannt.

Tonerde ist jedoch ein vergleichsweise teurer Rohstoff, der - wie angegeben - erst in aufwendiger Art und Weise aus natürlichen Aluminiumoxid-Vorkommen, wie z.B. Bauxit, gewonnen werden muß. Aus diesem Grund ist ein insbesondere hochfestes Tonerde-Porzellan vergleichsweise teuer, was sich gerade bei Massenfertigung für Anwendungen in der elektrischen Isoliertechnik nachteilig bemerkbar macht. Durch den Preis der Tonerde werden die Herstellungs- und Produktkosten erheblich belastet.

Aufgabe der Erfindung ist es, ein günstiges Verfahren zur. Herstellung eines Porzellans anzugeben, welches sich insbesondere für mechanisch stark beanspruchte Komponenten der elektrischen Isoliertechnik verwenden läßt. Weiter ist es Aufgabe der Erfindung, ein Porzellan anzugeben, welches bei gleichen mechanischen Eigenschaften gegenüber dem Stand der Technik günstiger ist. Ferner ist es Aufgabe der Erfindung, einen keramischen Isolator anzugeben, der gegenüber herkömmlichen Isolatoren des Standes der Technik bei gleichen mechanischen Eigenschaften günstiger ist.

Die erstgenannte Aufgabe wird erfindungsgemäß gelöst durch ein Verfahren zur Herstellung eines Porzellans, wobei calcinierter Bauxit, Ton mit einem Anteil von mehr als 5 Gew.-% an eingelagerten Fremdmetalloxiden, Kaolin mit einem Anteil von mehr als 5 Gew.-% an eingelagerten Fremdmetalloxiden, Feldspat, Magnesiumsilikat gemischt, gemahlen und zu einer Aufschlämmung verarbeitet werden, die Aufschlämmung zu einer formbaren Ausgangsmasse weiterverarbeitet wird und die Ausgangsmasse getrocknet und abschließend zum Porzellan gesintert wird.

Als Ausgangsmaterialien für das Herstellungsverfahren werden, bezogen auf das Gesamtgewicht, 48 bis 58 Gew.-% calciniertes Bauxit, 10 bis 20 Gew.-% eines Tons, welcher reich an Wechsellagen-Tonmineralien ist, 4 bis 12 Gew.-% illitischer Ton, 7 bis 15 Gew.-% Feldspat, 0,5 bis 3 Gew.-% Magnesiumsilikat, 8 bis 12 Gew:-% eines Kaolins, welcher reich an Wechsellagen-Tonmineralien ist, und 8 bis 16 Gew.-% illitreicher Kaolin verwendet. Mit dieser Zusammensetzung der Ausgangsmaterialien (man spricht bei Porzellanen auch von einem "Versatz") läßt sich ein Bauxit-Porzellan herstellen, welches hinsichtlich seiner dauerhaften alterungsfreien mechanischen Eigenschaften und Wärmedehnung hohen Anforderungen gerecht wird und sich insbesondere für mechanisch stark beanspruchte großformatige und temperaturwechselbeanspruchte Isolatoren eignet. Die mechanische Festigkeit läßt sich dabei durch den Anteil an calciniertem Bauxit steuern. Insbesondere kann durch den angegebenen Versatz ein hochfestes Bauxit-Porzellan hergestellt werden.

Gegebenenfalls können bei Bedarf übliche Hilfsstoffe zugemischt werden.

Mit anderen Worten wird bei dem angegebenen Verfahren vollständig auf den Einsatz von Tonerde verzichtet. Anstelle der Tonerde wird auf einen calcinierten Bauxit zurückgegriffen, der wesentlich kostengünstiger erhältlich ist als Tonerde. Calcinierter Bauxit ist bis auf den Calcinierungsvorgang ein naturbelassener Rohstoff. Durch das Calcinieren wird ein Teil des im Bauxit enthaltenen Aluminiumhydrats in Aluminiumoxid umgewandelt. Durch den Einsatz von calciniertem Bauxit gegenüber Tonerde lassen sich die Herstellungskosten drastisch senken.

Die Erfindung geht nun von der Erkenntnis aus, daß Korund (α-Al₂O₃) , welcher beim Brennen des Porzellans aus der Tonerde oder dem Bauxit entsteht, ein wesentlicher Garant für die mechanische Festigkeit des Porzellans ist. Da Tonerde mehr Korund liefert als calcinierter Bauxit (Bauxit enthält noch Verunreinigungen) muß zum Erzielen gleicher mechanischer Festigkeit beim Ersatz von Tonerde durch calcinierten Bauxit entsprechend mehr Bauxit eingebracht werden. Der erforderliche höhere Anteil an calciniertem Bauxit führt jedoch dazu, daß gegenüber einem Tonerde-Porzellan der Anteil der plastischen Komponenten Kaolin und Ton sowie des Glasphase-bildenden Feldspats zurückgenommen werden muß. Dies wiederum ist jedoch mit einschneidenden Veränderungen der mechanischen Eigenschaften des Porzellans verbunden.

Umfangreiche Untersuchungen haben nun ergeben, daß sich der negative Einfluß der Verringerung von Feldspat und plastischen Komponenten auf die mechanische Festigkeit des Porzellans kompensieren läßt, wenn als plastische Komponenten ein Ton und ein Kaolin mit jeweils einem Anteil von mehr als 5 Gew.-% an eingelagerten Fremdmetalloxiden verwendet wird und zusätzlich Magnesiumsilikat den Ausgangsstoffen beigemengt wird.

Bei Tonen und Kaolinen sind dabei den Fremdmetalloxide in so genannte Tonmineralien eingelagert. Tonminerale sind beispielsweise Schichtsilikate wie Kaolinit, Illit, oder Montmorollonit.

Es hat sich gezeigt, dass die in Ton oder Kaolin eingelagerten Fremdmetalloxide (Verunreinigungen) bei der Sinterung des Porzellans die Ausbildung eutektischer Schmelzphasen begünstigen. Dieser Effekt ist an sich z.B. aus W.E. Worall, "Clay and Ceramic Raw Materials", London (Applied Science Publishers Ltd.), 1979, S. 152 bekannt. Die Schmelzphase der Mischung tritt bei niedrigeren Temperaturen auf, als die Schmelzphase der einzelnen Komponenten. Die Sintertemperatur des Porzellans kann gesenkt werden, was wiederum die Herstellungskosten senkt. Das Besondere ist dabei, dass die in das Gitter der Tonmineraleeingebauten Fremdmetalloxide einen besonders günstigen Einfluss auf die Bildung der günstigen oder aggressiven Schmelzphase haben.

Durch die bei niedrigeren Temperaturen entstehende aggressive Schmelzphase kann ein nahezu vollständiges Lösen und Überführen des Quarzes aus Feldspat und Kaolin in die Glasphase erzielt werden. In herkömmlichen Tonerde-Porzellanen hingegn ist stets ein gewisser Anteil an Restquarz enthalten. Da Quarzeinschlüsse Störstellen im Gefüge des Porzellans darstellen, tritt ein Bruch des Porzellans häufig an Stellen eingelagerter Quarzpartikel auf. Quarzpartikel sind daher als solche im Gefüge des Porzellans unerwünscht. Ein vollständiges Überführen des schädlichen Quarzes in die Glasphase führt daher zu einer erheblichen Steigerung der mechanischen Festigkeit des Porzellans. Durch die besseren Gefügeeigenschaften wird die Streuung der Festigkeitswerte enger. Diese höhere Schadenstoleranz macht das Gefüge auch stabiler im Langzeitverhalten, was für Hochspannungsisolatoren besonders wichtig ist.

Durch den Einsatz von Tonen und Kaolinen mit einem Anteil von mehr als 5 Gew.% an eingelagerten Fremdmetalloxiden entsteht also eine aggressive Schmelzhase, welche dazu führt, dass im fertigen Porzellan nahezu keine Quarzpartikel mehr vorhanden sind. Das enthaltene Siliziumdioxid liegt nahezu ausschließlich in Form einer Glasphase vor. Auf diese Weise läßt sich in den Ausgangssubstanzen der Anteil an Bauxit, welches der Hauptlieferant für Korund und damit für mechanische Festigkeit ist, erheblich steigern, ohne daß die Verringerung der Anteile an plastischen Komponenten und Feldspat, welches der Hauptlieferant für Quarz ist, einen negativen Einfluß auf die mechanische Festigkeit des Porzellans hat. Als wichtiger Nebeneffekt tritt dabei eine Absenkung der Sintertemperatur auf, was zusätzlich - wie oben bereits angegeben - die Herstellungskosten senkt und teuere Ofenanlagen und Brennhilfsmittel schont.

Entgegen dem bisherigen Urteil der Fachwelt weist die Erfindung einen Weg, wie zur Herstellung eines Porzellans mit hoher mechanischer Festigkeit Tonerde durch ein wesentlich günstigeres calciniertes Bauxit ersetzt werden kann. Die Erfindung zeigt dabei auf, wie der Anteil des Bauxits, welcher Hauptlieferant für Korund ist, erhöht werden kann, ohne daß die hierzu erforderlich werdende Verringerung der Anteile der plastischen Komponenten und des Feldspats einen negativen Einfluß auf das Gefüge des Porzellans hat.

Als besonders günstig für die Ausbildung der aggressiven Schmelzphase haben sich die Fremdmetalloxide Eisenoxid Fe₂O₃, Magnesiumoxid MgO, Kaliumoxid K₂O, Natriumoxid Na₂O und Kalziumoxid CaO erwiesen. Es ist daher vorteilhaft, wenn die Summe der Anteile dieser Fremdmetalloxide in dem Ton oder in dem Kaolin mehr als 5 Gew.-% beträgt.

In einer weiteren vorteilhaften Ausgestaltung der Erfindung wird ein calciniertes Bauxit mit einem Anteil zwischen 80 und 90 Gew.-% Aluminiumoxid Al₂O₃ verwendet. Auf diese Weise läßt sich besonders viel des Hauptfestigkeitsträgers Korund in das Porzellan bei vergleichsweise niedrigem Bauxit-Anteil einbringen. Ein solches Bauxit ist frei erhältlich und wird z.B. von Fa. Frank und Schulte, Essen, vertrieben.

Für die Ausbildung der aggressiven Schmelzphase und für eine Absenkung der Sintertemperatur ist es besonders vorteilhaft, wenn zur Herstellung ein illitischer Ton und/oder ein Ton, welcher reich an Wechsellagen-Tonmineralien ist, verwendet wird. Dabei wird unter einem illitischen Ton ein Ton verstanden, welcher einen hohen Anteil des Tonminerals Illit aufweist. Unter einem Wechsellagen (mixed-layer)-Tonmineral wird dabei ein solches Tonmineral verstanden, welches gegenüber Kaolinit keine geordnete Gitterstruktur ausbildet, sondern sich vielmehr durch Fehlordnungen auszeichnet und in dessen Gitterstruktur erhöhte Mengen Alkali- und Erdalkaliionen eingebaut sind, die eine Flußmittelwirkung ausüben. Als Handelsname für illitischen Ton ist Illit selbst gebräuchlich. Ein Ton, welcher reich an Wechsellagen-Tonmineralien ist, ist beispielsweise der unter der Bezeichnung Ball Clay Hymod KC erhältliche Ton.

Ebenso wie bei Ton hat es sich auch als besonders vorteilhaft für die Ausbildung einer aggressiven Schmelzphase erwiesen, wenn zur Herstellung ein illitreicher Kaolin und/oder ein Kaolin, welcher reich an Wechsellagen-Tonmineralien ist, verwendet wird. Ein illitreicher Kaolin ist beispielsweise der an der Lagerstätte Oberwinter, Deutschland, abgebaute Kaolin. Ein Kaolin, welcher reich an Wechsellagen-Tonmineralien ist, wird beispielsweise an der Lagerstätte Seilitz, Deutschland, gewonnen. Die Summe der Anteile von Eisenoxid, Magnesiumoxid, Kaliumoxid und Natriumoxid beträgt bei Illit 11,7 Gew.-% bei Ball Clay Hymod KC 6,1 Gew.-%, beim Kaolin Oberwinter 6,4 Gew.-% und beim Kaolin Seilitz 5,7 Gew.-%. Die Zusammensetzung im einzelnen ist der Tabelle 1 zu entnehmen, welche die Anteile der angesprochenen eingelagerten Fremdmetalloxide für verschiedene Kaoline und Tone aufzeigt.

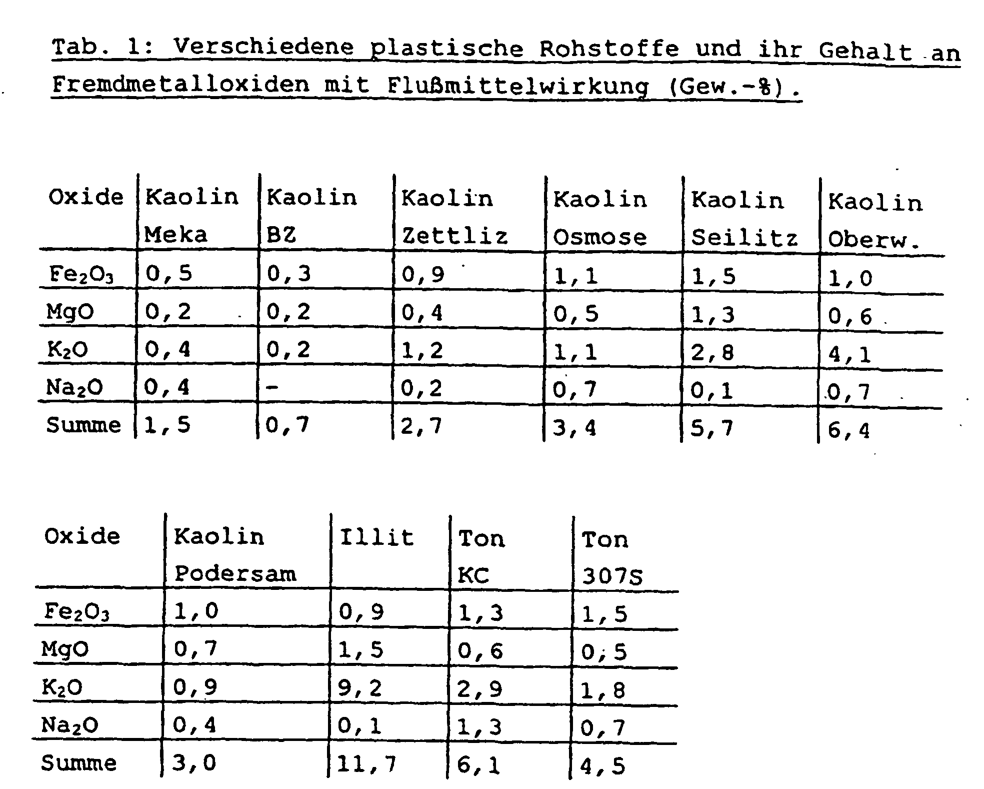

Vorteilhafterweise wird als Feldspat ein Nephelin-Syenit verwendet. Nephelin-Syenit ist ein Feldspatoid-Mineral der Summenformel KNa₃(AlSiO₄)₄ mit schwankenden Anteilen an Kalium und Natrium. Nephelin-Syenit wirkt sich besonders günstig auf die Absenkung der zur Dichtsinterung erforderlichen Temperatur aus.

Weiter von Vorteil ist es, wenn bei dem Herstellungsverfahren für Magnesiumsilikat Speckstein verwendet wird. Speckstein zeigt gegenüber anderen bekannten Magnesiumsilikaten (z.B. Talkum) zur Herstellung des Bauxit-Porzellans die günstigsten Eigenschaften.

Da calciniertes Bauxit in der Regel in grober Körnung käuflich zu erwerben ist, ist es von Vorteil, das calcinierte Bauxit separat vor der Mischung mit den anderen Komponenten vorzumahlen. Es hat sich dabei als weiter vorteilhaft gezeigt, wenn das calcinierte Bauxit zusammen mit einem Anteil des Tons vorgemahlen wird. Zur Mahlung werden üblicherweise Kugelmühlen verwendet, wobei die Mahlung des calcinierten Bauxits insbesondere solange durchgeführt wird, bis die Körnung der üblicherweise verwendeten Tonerde erzielt ist.

Der Korund-Gehalt und damit die mechanische- Festigkeit des fertigen Porzellans wird maßgeblich durch die Sintertemperatur beeinflußt. Es hat sich als vorteilhaft hinsichtlich der mechanischen Eigenschaften des Porzellans gezeigt, wenn bei einer Temperatur zwischen 1150 und 1300 °C, insbesondere zwischen 1190 und 1220 °C, gesintert wird. Dies ist eine niedrigere Sintertemperatur als bei herkömmlichen Tonerde-Porzellanen üblich.

Als weiter vorteilhaft für die Erfindung hat es sich gezeigt, wenn der Abkühlprozeß nach dem Sintern durch Verwendung von Kaltluft beschleunigt wird. Auf diese Art und Weise wird im Sinterofen ein rasches Abkühlen des Porzellans erzielt. Durch das rasche Abkühlen wird eine Umwandlung von Korund in Mullit unterbunden und die Mullitkristalle werden klein gehalten. Solche Gefüge sind wiederum vorteilhaft für die mechanischen Eigenschaften des Porzellans.

Die Aufgabe hinsichtlich des Porzellans wird erfindungsgemäß durch ein Porzellan gelöst, welches mit dem oben angegebenen Herstellungsverfahren erhältlich ist. Ein solches Bauxit-Porzellan unterscheidet sich von einem Tonerde-Porzellan durch die Porengröße und die Porenverteilung. So weist das Bauxit-Porzellan gegenüber einem Tonerde-Porzellan mehr Poren auf, wobei jedoch die Porengröße weniger stark schwankt und die Poren homogener verteilt sind. Dies ist offensichtlich günstig für das Bruchverhalten und für die Festigkeit des Bauxit-Porzellans. Weiter weisen die Korund-Kristalle im Bauxit-Porzellan eine andere Form auf als im Tonerde-Porzellan. Die Korund-Kristalle im Tonerde-Porzellan haben eine längliche, plättchenförmige Gestalt, im Bauxit-Porzellan dagegen eine im wesentlichen runde Gestalt. Darüber hinaus sind die Korund-Kristalle im Bauxit-Porzellan nahezu doppelt so groß wie im Tonerde-Porzellan und teilweise durchsetzt mit Einschlüssen, wie z.B. Titanoxid. Diese Unterschiede lassen sich durch einen Gefügevergleich mittels elektronenmikroskopischer Aufnahmen leicht feststellen. Darüber hinaus ist das Bauxit-Porzellan nahezu frei von Restquarz-Anteilen und deshalb im Langzeitverhalten dem Tonerde-Porzellan überlegen.

Die Aufgabe hinsichtlich des Porzellans wird weiter erfindungsgemäß durch ein Porzellan gelöst, welches 12 bis 21 Gew.-% Mullit, 30 bis 46 Gew.-% Korund, 40 bis 50 Gew.-% Glasphase und 0 bis 2 Gew.-% Quarz umfaßt. Ein derartiges Porzellan läßt sich durch das oben angegebene Verfahren unter Verwendung von calciniertem Bauxit herstellen und ist damit gegenüber einem herkömmlichen Tonerde-Porzellan eine preiswerte Alternative. Durch den geringen Quarzanteil erhält ein solches Porzellan sehr gute mechanische Eigenschaften und ein stabiles Langzeitverhalten. Bei herkömmlichen Tonerde-Porzellanen liegt der Quarzanteil mit bis zu 6 Gew.-% höher.

Ein hochfestes Porzellan mit einer Biegefestigkeit, gemessen am glasierten Biegestab gemäß DIN IEC 60672 von größer 170 N/mm² bis über 200 N/mm² weist ein Porzellan auf, welches vorteilhafterweise 12 bis 15 Gew.-% Mullit, 38 bis 46 Gew.-% Korund, 44 bis 47 Gew.-% Glasphase und 0 bis 1 Gew.-% Quarz umfaßt.

In einer weiteren vorteilhaften Ausgestaltung der Erfindung beträgt die Korngröße der eingelagerten Quarzpartikel 20 bis 40 µm, wobei in einem Querschnitt des Porzellans weniger als 10 Quarzpartikel pro mm² vorliegen. Ein solches Porzellan läßt sich ebenfalls leicht durch das oben angegebene Herstellungsverfahren erzielen. Dadurch, daß dieses Porzellan nahezu frei ist von Quarzeinschlüssen, erklärt sich seine hohe mechanische Festigkeit und Stabilität im Langzeitverhalten. Ein derartiges Porzellan genügt besonders hohen Anforderungen für mechanisch extrem belastete und großformatige Isolatoren.

Die Aufgabe hinsichtlich des keramischen Isolators wird erfindungsgemäß durch einen Isolator gelöst, dessen Isoliermasse aus dem angegebenen Porzellan besteht.

Ausführungsbeispiele der Erfindung werden im folgenden anhand einer Zeichnung näher erläutert. Es zeigen dabei:
- FIG 1: schematisch das Herstellungsverfahren für ein Bauxit-Porzellan,
- FIG 2: eine elektronenmikroskopische Aufnahme eines chemisch geätzten Tonerde-Porzellans,
- FIG 3: eine elektronenmikroskopische Aufnahme eines chemisch geätzten Bauxit-Porzellans,
- FIG 4: eine graphische Darstellung der Weibull-Verteilung bezüglich der Bruchwahrscheinlichkeit eines hochfesten Bauxit-Porzellans,
- FIG 5: ein Röntgenspektrum zum Vergleich eines Tonerde- und eines Bauxit-Porzellans,
- FIG 6: ein weiteres Röntgenspektrum zum Vergleich eines Tonerde- und eines Bauxit-Porzellans und
- FIG 7: einen keramischen Hochspannungsisolator mit einer Anzahl von charakteristischen Schirmen.

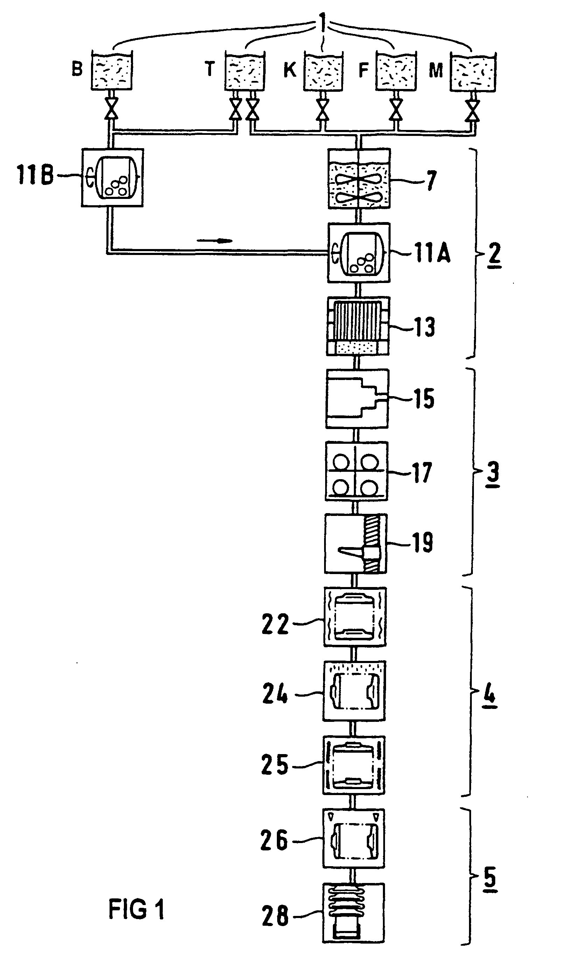

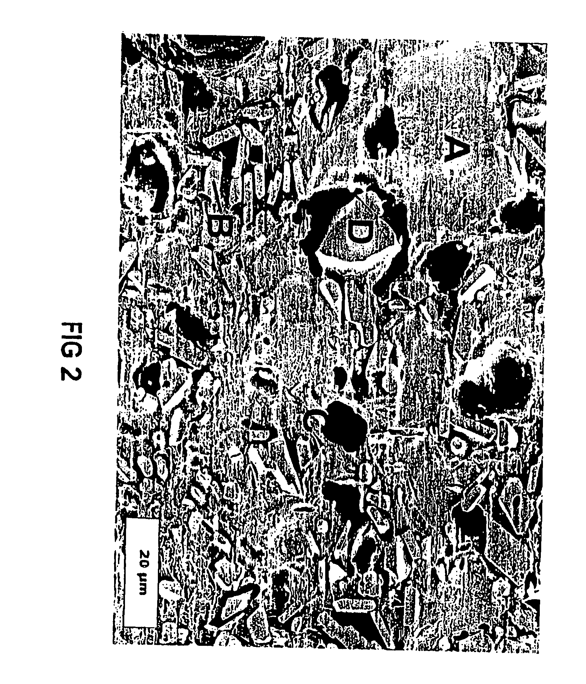

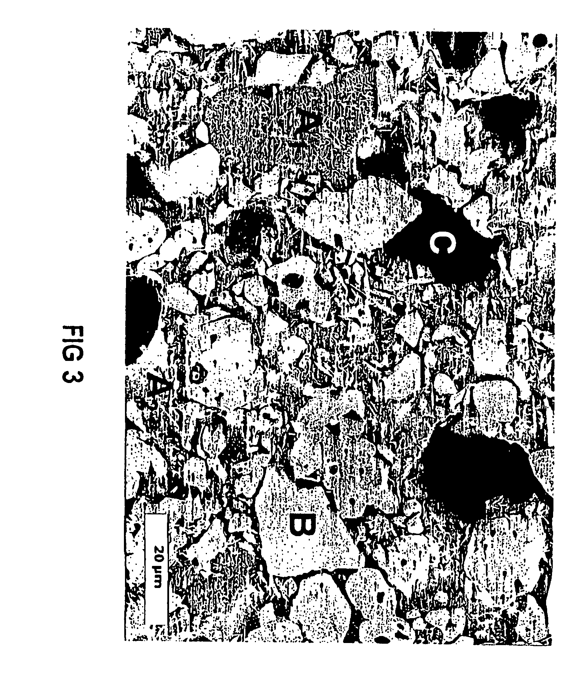

In Figur 1 ist schematisch ein Herstellungsverfahren für ein Bauxit-Porzellan, insbesondere für einen keramischen Hochspannungsisolator aus einem Bauxit-Porzellan, gezeigt. Als Ausgangsmaterialien 1 werden hierzu calciniertes Bauxit CB, Ton T, Kaolin K, Feldspat F und Magnesiumsilikat M verwendet. Es wird hierbei ein calciniertes Bauxit mit einem Aluminiumoxid-Gehalt von etwa 85 Gew.-% verwendet. Das Bauxit wurde bei einer Temperatur von etwa 1500 °C calciniert. Als Ton wird Ball Clay Hymod KC sowie ungarischer Illit eingesetzt. Des weiteren wird Feldspat sowie Nephelin-Syenit eingesetzt. Als Kaolin wird Osmose Kaolin, Seilitzer Kaolin sowie Oberwinterer Kaolin verwendet. Als Magnesiumsilikat wird Speckstein eingebracht.

Der Gewichtsanteil der eingebrachten Materialien kann der Tabelle 2 entnommen werden. Die Gewichtsanteile werden dabei durch entsprechendes Einwiegen den Vorratsbehältern entnommen.

**Tab. 2:**

| Rezeptur für den Versuchsversatz: | | | |
|---|---|---|---|
| Anteil in Gew.-% | Bezeichnung | Anteil in Gew.-% | Bezeichnung |
| 52 | Bauxit | 2 | Speckstein |
| 14 | Ball Clay Hymod KC | 4 | Osmose Kaolin |
| 10 | Ung. Illit | 4 | Seilitzer Kaolin |
| 5 | Nephelin-Syenit | 4 | Oberwinterer Kaolin |
| 5 | Feldspat | | |

Das Herstellungsverfahren umfaßt insgesamt das Verarbeiten 2 der Ausgangsmaterialien 1 zu einer formbaren Ausgangsmasse, Formen 3 der Ausgangsmasse zu einem Formstück in Gestalt eines mit Schirmen versehenen Hohlzylinders, Sintern 4 des Formstücks und Endbearbeiten 5 des gesinterten Formstücks zu dem fertigen Hochspannungsisolator aus Bauxit-Porzellan. Das Verarbeiten 2 der Ausgangsmaterialien 1 zu einer formbaren Ausgangsmasse geschieht über die einzelnen Schritte Mischen 7 der Ausgangsmaterialien, Mahlen 11A und 11B der Materialien in einer mit Mahlkugeln versehenen Trommelmühle unter Wasserzugabe zu einem Schlicker oder Aufschlämmung und Filterpressen 13 des Schlickers und Abpressen des zugegebenen Wassers. Das calcinierte Bauxit CB wird hierbei separat unter Zugabe eines Anteils von 4 Gew.-% des Ball Clay Hymod KC 15 Stunden lang mit Wasser vorgemahlen. Anschließend werden alle Rohstoffe zusammengemischt und weitere 2,5 Stunden gemahlen.

Nach dem Filterpressen 13 liegt eine formbare Ausgangsmasse der Rohmaterialien 1 vor, welche durch den anschließenden Prozeß des Formens 3 zu einem Formkörper verarbeitet wird.

Das Formen 3 umfaßt hierbei ein Strangpressen 15 zur Pressung von hohlzylindrischen Rohlingen aus der Rohmasse, ein daran anschließendes Trocknen 17 der Rohlinge und ein Formdrehen 19, wodurch durch Abdrehen die hohlzylindrischen Rohlinge mit tellerförmigen Schirmen versehen werden, so daß ein Hochspannungsisolator aus dem Bauxit-Porzellan erhalten wird.

Das Sintern 4 des beim Formdrehen 19 erhaltenen Formkörpers umfaßt das erneute Trocknen 22 des Formkörpers, das Glasieren 24 des getrockneten Formkörpers und daran anschließend das Brennen 25 des glasierten Formstücks in einem geeigneten Brenn- oder Sinterofen. Es wird dabei bei einer Temperatur zwischen 1150 bis 1300 °C gesintert.

Der gesinterte Formkörper aus dem Bauxit-Porzellan wird anschließend endbearbeitet 5. Durch Schneiden 26 wird der Formkörper auf die gewünschte Länge gebracht und durch Armieren 28 mit geeigneten Anschlußstücken versehen. Damit liegt der fertige Hochspannungsisolator mit einem Isolierkörper aus Bauxit-Porzellan vor.

Figur 2 zeigt eine elektronenmikroskopische Aufnahme eines chemisch geätzten Tonerde-Porzellans bei einer Vergrößerung von 1000 : 1. Zur Orientierung ist maßstabsgerecht die Größe von 20 µm eingezeichnet. Das Tonerde-Porzellan wurde bei einer Temperatur von 1230 bis 1250 °C gesintert, wobei der Tonerdeanteil im Versatz 27 Gew.-% betrug. Die übrigen Anteile im Versatz waren 42 Gew.-% Ton und Kaolin sowie 27 % Feldspat und ein Rest an Sinterhilfsmitteln. Deutlich zu erkennen ist die Gefügematrix A, welche aus Mullit (Kristallnadeln) und Glasphase besteht. Auch die Poren C (schwarz) können leicht der Figur entnommen werden. Zusätzlich ist ein Korund-Partikel B sowie ein Quarz-Partikel D kenntlich gemacht.

Im Vergleich hierzu ist in Figur 3 eine elektronenmikroskopische Aufnahme eines chemisch geätzten Bauxit-Porzellans ebenfalls bei einer Vergrößerung von 1000 : 1 dargestellt. Der Versatz wies hierbei einen Anteil von calciniertem Bauxit (85 Gew.-% Aluminiumoxid) von 52 Gew.-% auf. Die anderen Bestandteile wurden entsprechend dem in Tabelle 2 angegebenen Versatz zugefügt. Die Sintertemperatur betrug 1230 °C. Auch in Figur 3 ist die Gefügematrix A, bestehend aus Mullit A₁ und Glasphase A₂, deutlich zu erkennen. Weiter ist ein Korund-Partikel B sowie eine Pore C gekennzeichnet.

Im Vergleich der beiden Figur 2 und 3 wird deutlich sichtbar, daß das Bauxit-Porzellan gemäß Figur 3 keine Quarz-Partikel mehr enthält. Das herkömmliche Tonerde-Porzellan zeigt hingegen im Gefüge gemäß Figur 2 neben Korund, Mullit und Glasphase einen für die mechanische Festigkeit insgesamt schädlichen Restquarz D. Im Bauxit-Porzellan hingegen ist der Restquarz D vollständig aufgelöst und nicht mehr erkennbar.

Weiterhin zeigt sich deutlich, daß die Korund-Partikel E im Bauxit-Porzellan größer sind als im Tonerde-Porzellan. Ferner weisen die Korund-Partikel B im Bauxit-Porzellan eine im wesentlichen runde Gestalt auf, wohingegen die Korund-Partikel B im Tonerde-Porzellan eher länglich ausgebildet sind.

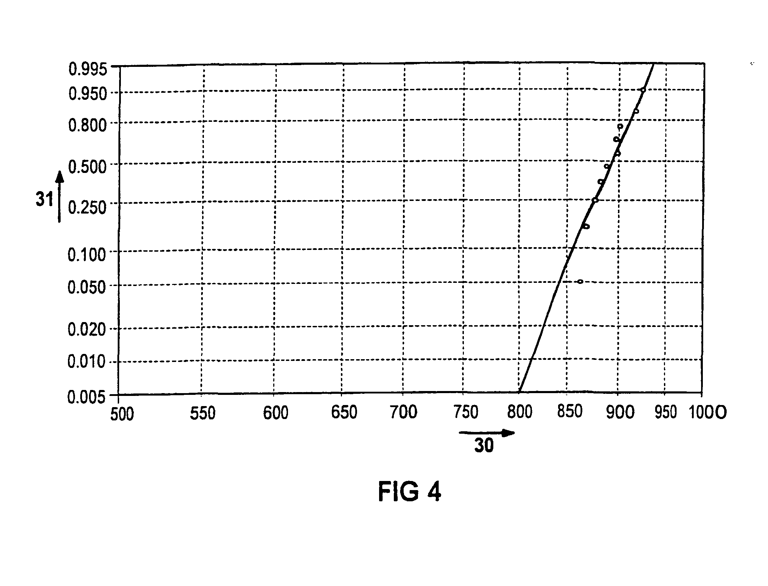

In Figur 4 ist nun die Weibull-Verteilung bezüglich der Bruchwahrscheinlichkeit für ein hochfestes Bauxit-Porzellan dargestellt, welches wie für Figur 3 angegeben hergestellt wurde. Auf der Abszisse ist die Bruchspannung 30 in MPa aufgetragen. Die Bruchwahrscheinlichkeit 31 in % ist auf der ordinate aufgetragen. Unterschiedliche Gefügequalitäten von keramischen Werkstoffen werden durch die Weibull-Statistik gut beschrieben. Der Weibull-Modul m ist dabei eine wichtige Materialkonstante, weil er die Streubreite der ermittelten Einzelwerte charakterisiert. Die Streuung ergibt sich als Ergebnis der Materialeigenschaften und dabei als Funktion der Häufigkeit und Verteilung von makroskopischen Fehlstellen. Je höher der Weibull-Modul m ist, um so geringer ist die Streubreite. Figur 4 zeigt nun die Weibull-Verteilung des hochfesten Bauxit-Porzellans, woraus sich ein Weibull-Modul m von 45,1 errechnen läßt. Da die Weibull-Statistik als eine geeignete Methode zur qualitativen Beurteilung des Gefüges von Keramiken herangezogen werden kann, bestätigt der vergleichsweise hohe Weibull-Modul m dem hochfesten Bauxit-Porzellan eine sehr gute Gefügegleichmäßigkeit.

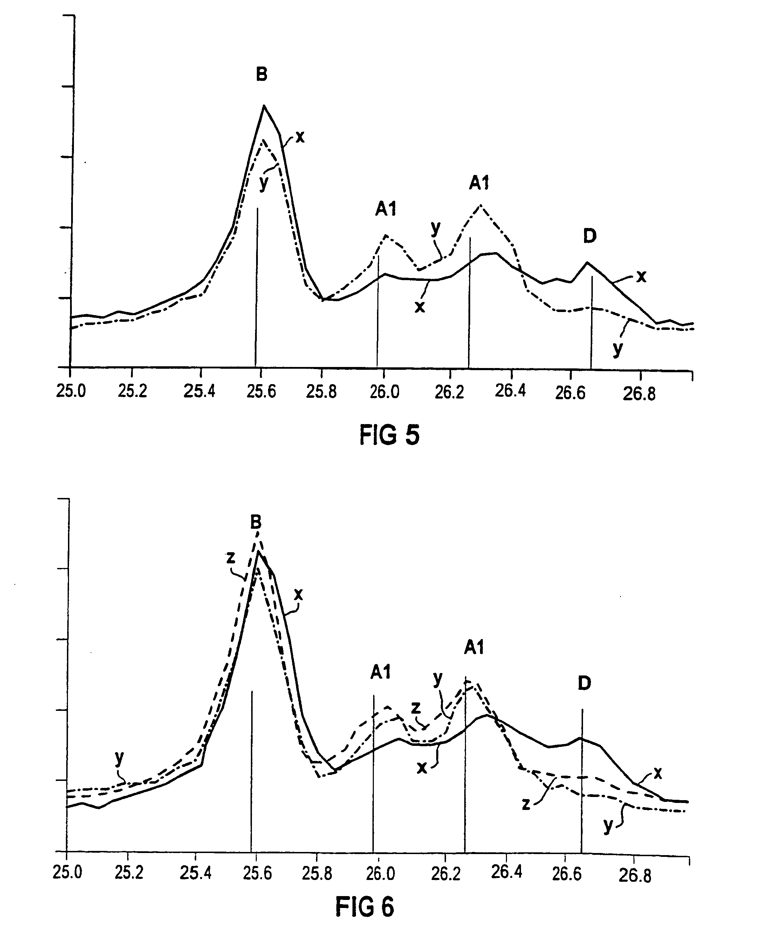

In Figur 5 sind die Röntgenspektren eines Tonerde-Porzellans und eines Bauxit-Porzellans einander gegenüber gestellt. Das Tonerde-Porzellan wurde aus einem Versatz der Zusammensetzung 42 Gew.-% Ton und Kaolin, 14 Gew.-% Feldspat, 40 Gew.-% Tonerde und einem Rest an Sinterhilfsmitteln hergestellt und bei einer Temperatur von 1230 bis 1250 °C gesintert. Das Tonerde-Porzellan wies dabei eine Biegefestigkeit am glasierten Biegestab von 209 N/mm² auf. Das Bauxit-Porzellan wurde aus einem Versatz der Zusammensetzung 35 Gew.-% Ton und Kaolin, 8 Gew.-% Feldspat, 52 Gew.-% calciniertes Bauxit und einem Rest an Sinterhilfsmitteln hergestellt und bei einer Temperatur von 1190 bis 1220 °C gesintert. Das Bauxit-Porzellan wies am glasierten Biegestab eine Biegefestigkeit von 199, 6 N/mm² auf.

Das Röntgenspektrum des Tonerde-Porzellans ist mit X, das Röntgenspektrum des Bauxit-Porzellans mit Y gekennzeichnet. Die Korund B, Mullit A₁ und Quarz D entsprechenden Röntgenpeaks sind gekennzeichnet.

Es wird deutlich sichtbar, daß das Bauxit-Porzellan bei gleicher mechanischer Festigkeit gegenüber einem Tonerde-Porzellan einen verringerten Quarz-Anteil und einen erhöhten Mullit-Anteil aufweist.

In Figur 6 sind nun die Röntgenspektren X und Y gemäß Figur 5 noch einmal aus einer anderen Meßreihe dargestellt. Zusätzlich ist ein Röntgenspektrum Z dargestellt, welches von einem Bauxit-Porzellan aufgenommen wurde, das aus einem Versatz mit 56 Gew.-% calciniertem Bauxit hergestellt wurde. Die übrige Zusammensetzung war dabei wie folgt 33,5 Gew.-% Ton und Kaolin, 10,5 Gew.-% Feldspat und Speckstein. Die Sintertemperatur betrug 1190 bis 1220 °C.

Wiederum sind die Röntgenpeaks für Korund B, Mullit A₁ und Quarz D gekennzeichnet. Aus Figur 6 wird deutlich sichtbar, daß es mit einem Anteil von 56 Gew.-% an calciniertem Bauxit im Versatz gelingt, den Korund-Gehalt eines hochfesten Tonerde-Porzellans zu überschreiten, wobei beide Massen hinsichtlich der mechanischen Festigkeit vergleichbare Eigenschaften aufweisen. Dies war bislang nicht vorstellbar.

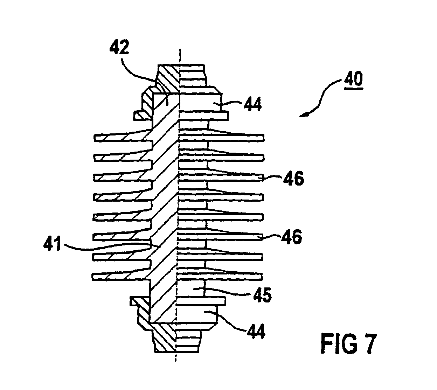

In Figur 7 ist ein als Hochspannungsisolator ausgebildeter keramischer Isolator 40 in teilweise aufgebrochener Darstellung gezeigt. Der Isolator 40 weist einen Isolatorgrundkörper 42 aus einem Bauxit-Porzellan 41 sowie Anschlußkappen 44 zum Anschluß und/oder zur Führung von stromführenden Leitungen auf. Der Isolatorgrundkörper 42 ist als ein im wesentlichen zylindrischer Strunk 45 mit einer Anzahl von darauf aufgebrachten tellerförmigen Rippen 46 ausgebildet. Das Bauxit-Porzellan 41 ist, hier nicht näher dargestellt, mit einer Glasur oberflächlich überzogen. Der gezeigte Isolator 40 eignet sich insbesondere als Bahnisolator gemäß DIN 48006.

### Beispiel 1:

Es wird der äquivalente Austausch von Tonerde durch calciniertes Bauxit untersucht. Hierzu werden die Massen I, II, III, IV und V einander gegenübergestellt.

Die Massen I und V sind Tonerde-Porzellane, wobei der Versatz einen Anteil von 27 Gew.-% bzw. von 40 Gew.-% Tonerde aufwies. Der Versatz enthielt weiter für Masse I 43, 5 Gew.-% Ton und Kaolin, 27,5 Gew.-% Feldspat sowie einen Rest an Sinterhilfs bzw. -flußmitteln. Der Versatz für Masse V enthielt weiter 43, 3 Gew.-% Ton und Kaolin, 12,1 Gew.-% Feldspat und einen Rest an Sinterhilfs und -flußmitteln. Die Sintertemperatur für Masse I und Masse V betrug 1230 bis 1250 °C.

Die Massen II und IV sind Bauxit-Porzellane, wobei in Masse II gegenüber dem Versatz von Masse 1 27 Gew.-% Tonerde äquivalent durch 27 Gew.-% calciniertes Bauxit ersetzt wurden. Im Versatz für Masse IV wurde gegenüber der Masse V 40 Gew.-% Tonerde äquivalent durch 40 Gew.-% calciniertes Bauxit ausgetauscht. Die Sintertemperatur betrug für Masse II und für Masse IV 1230 bis 1250 °C.

Die Masse III entspricht einem Tonerde/Bauxit-Porzellan, wobei im Versatz 13,5 Gew.-% Tonerde und 13,5 Gew.-% Bauxit enthalten sind. Die weitere Zusammensetzung des Versatzes der Masse III entspricht den Massen I bzw. II.

Die Zusammensetzung des verwendeten calcinierten Bauxits ist Tabelle 4 zu entnehmen. Dieses calcinierte Bauxit ist im Handel frei erhältlich.

**Tab. 4:**

| Chemische Analyse des calcinierten Bauxits | |
|---|---|
| SiO₂ | 8,85 |
| Al₂O₃ | 84,32 |
| Fe₂O₃ | 0,94 |
| TiO₂ | 4,11 |
| CaO | 0,02 |
| MgO | 0,22 |
| K₂O | 1,0 |
| Na₂O | 0,47 |
| GV | 0,24 |

Beim verwendeten calcinierten Bauxit liegt der lösliche Na₂O-Gehalt mit 0,03 Gew.-% sehr niedrig. γ-Al₂O₃ konnte nicht nachgewiesen werden, das Aluminiumoxid liegt demnach als Korund vor. Das Material als solches hat einen Siebrückstand von 9,1 % > 45 µm und ist damit deutlich gröber als Tonerde mit maximal 1 % > 45 µm. Der Cilas-D₅₀-Wert oder die Kornfeinheit liegt mit 14,8 µm doppelt so hoch wie bei Tonerde mit 6 bis 8 µm. Der Bauxit wurde deshalb vor der Einwage des Versatzes 8 Stunden vorgemahlen, um die Feinheit der Tonerde zu erreichen.

In Tabelle 3 sind chemische Analysen und Meßwerte der Massen I bis V zusammengefaßt. Die Ermittlung der Meßwerte erfolgte gemäß DIN VDE 0335.

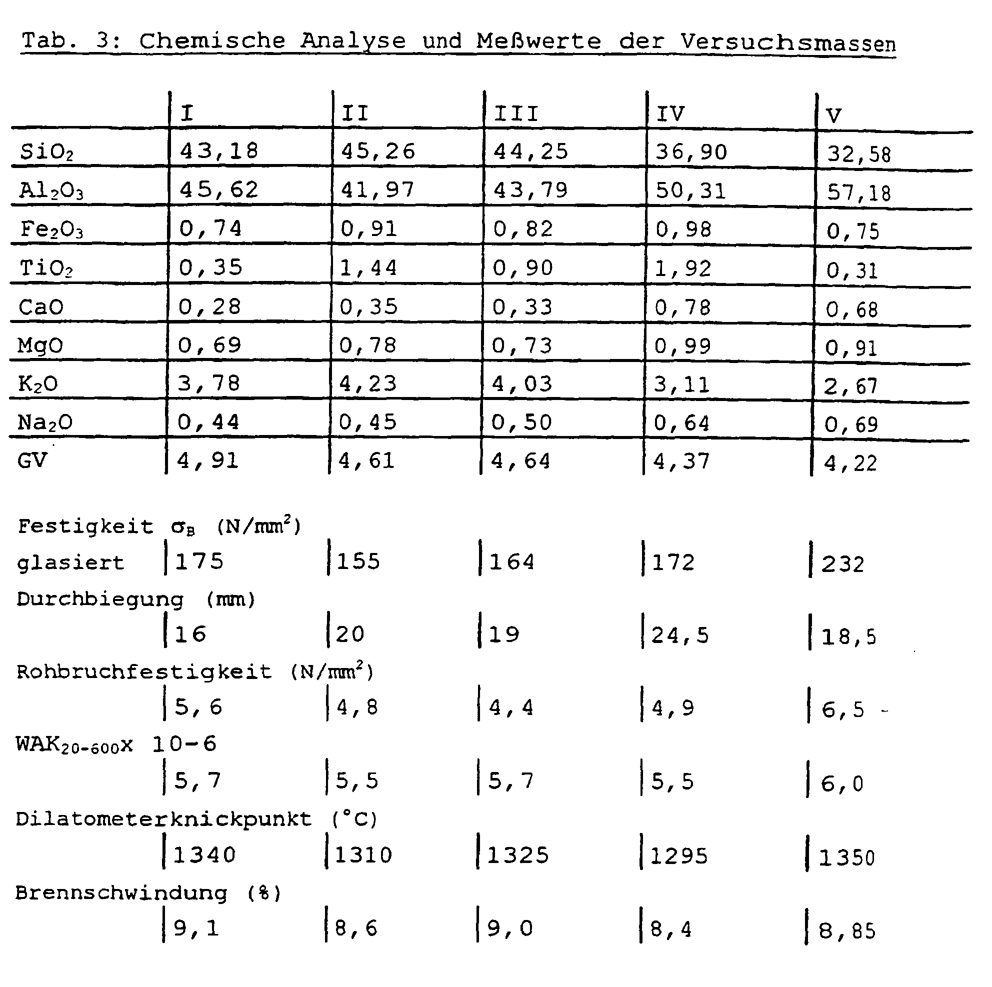

Aus Tabelle 3 wird klar ersichtlich, daß die Festigkeit des Porzellans bei einer Substitution der Tonerde durch calciniertes Bauxit im Verhältnis 1 : 1 deutlich absinkt. Dabei ist der Verlust an Festigkeit bei Verwendung von calciniertem Bauxit in Massen mit hohem Tonerde-Gehalt prozentual deutlich höher als bei Massen mit niedrigem Tonerde-Gehalt. So erreicht die Masse IV mit einem Anteil von 40 Gew.-% Tonerde bei Austausch durch calciniertes Bauxit 21,5 % weniger Festigkeit. Die Masse II mit einem Anteil von 27 Gew.-% Tonerde erreicht bei Austausch durch calciniertes Bauxit 11,5 % weniger Festigkeit.

Weiter ist Tabelle 3 zu entnehmen, daß bei Austausch der Tonerde durch calciniertes Bauxit die Werte der Durchbiegung steigen. Weiter wirkt Bauxit offensichtlich erniedrigend auf den Sinterbeginn, auf die Brennschwindung und den Wärme-Ausdehnungs-Koeffizient (WAK) .

### Beispiel 2:

Es wird eine Masse VI gemäß der Versatzrezeptur nach Tabelle 2 hergestellt. Tabelle 5 zeigt die Zusammensetzung des verwendeten calcinierten Bauxits gemäß einer chemischen Analyse und einer Korngrößenbestimmung.

**Tab. 5:**

| Chemische und physikalische Werte des verwendeten Bauxits | | | | | | | | | | |
|---|---|---|---|---|---|---|---|---|---|---|
| Chem. Analyse | | | | | | | | | Korngröße | |
| SiO₂ % | Al₂O₃ % | Fe₂O₃ % | TiO₂ % | CaO % | MgO % | K₂O % | Na₂O % | GV % | SR 63 µm | D₅₀-Cilas µm |
| 8,74 | 84,84 | 1,35 | 4,02 | 0,18 | 0,26 | 0,47 | 0,05 | 0,11 | 16,3 | 24,3 |

Da das calcinierte Bauxit wesentlich gröber ist als Tonerde wurde es in der Kugelmühle 15 Stunden lang mit Wasser und 4 % des Ball Clay Hymod KC vorgemahlen. Damit wurde ein Cilas-D₅₀-Wert von 9,7 µm erreicht. Anschließend wurden die restlichen Rohstoffe zugegeben und weitere 2,5 Stunden gemahlen. Damit stellte sich ein Siebrückstand SR > 63 µm von 0,26 % und ein Cilas-D₅₀-Wert von 7,4 µm ein. Die Sintertemperatur betrug 1220 °C.

Tabelle 6 zeigt nun die chemische Zusammensetzung des Bauxit-Porzellans Masse VI.

**Tab. 6:**

| Chem. Analyse des Bauxit-Porzellans Masse VI | | | | | | | | |
|---|---|---|---|---|---|---|---|---|
| SiO₂ | Al₂O₃ | Fe₂O₃ | TiO₂ | CaO | MgO | K₂O | Na₂O | GV % |
| 31,34 | 57,73 | 1,13 | 2,27 | 0,21 | 1,09 | 2,74 | 0, 75 | 2,73 % |

An Bruchstücken von Biegestäben der Masse VI wurde gemäß DIN VDE 0335 T.2 die Prüfung auf Fuchsinporosität durchgeführt. In keines der Bruchstücke drang während der Prüfung Farbstoff ein. Das Bauxit-Porzellan ist demnach fuchsindicht.

Die Rohdichte der Masse VI, ermittelt nach DIN 51065 mit der Auftriebsmethode, beträgt 2,74 g/cm³. Zum Vergleich beträgt die Rohdichte der Masse I 2,69 g/cm³ und die Rohdichte der Masse V 2,77 g/cm³.

In Tabelle 7 sind weitere Eigenschaften des Bauxit-Porzellans Masse VI gegenüber den Tonerde-Porzellanen Masse V und Masse I gegenübergestellt.

**Tab. 7:**

| Schwindung/Festigkeiten: | | | |
|---|---|---|---|
| | Masse VI | Masse V | Masse I |
| Dil.-Knickpunkt °C | 1315 | 1340 | 1325 |
| SR > 63 µm (%) | 0,26 | 1,8 | 0,7 |
| Ziehfeuchte (%) | 19,8 | 19,4 | 19,0 |
| Trockenschw. (%) | 7,74 | 7,0 | 6,8 |
| Brennschw. (%) | 9,52 | 8,9 | 8,7 |
| Gesamtschw. (%) | 18,0 | 16,6 | 16,1 |
| Rohbruchf. (N/mm²) | 4,6 | 6,2 | 6,2 |
| Durchbiegung (mm) | 20,5 | 16,0 | 18,5 |
| Biegefestigk. unglasiert N/mm² | 163,2 | 174 | 138 |
| Biegefestigkeit glasiert N /mm² | 199,6 | 209 | 173 |
| Brennfarbe innen/außen | mittelbraun/ grau | braune Pkte. / weiß | weiß/weiß |

Es wird klar ersichtlich, daß das Bauxit-Porzellan Masse VI eine mechanische Festigkeit von vergleichbaren Tonerde-Porzellanen erreicht.
In Tabelle 8 werden die kristallinen Anteile im Gefüge der Massen VI, I und V gegenübergestellt.

**Tab. 8:**

| Vergleich der kristallinen Anteile im Gefüge in %: | | | |
|---|---|---|---|
| | Quarz | Mullit | Korund |
| Masse I | 3 | 10 | 24 |
| Masse V | 2 | 9 | 34 |
| Masse VI | - | 15 | 30 |

Das Bauxit-Porzellan Masse VI zeigt einen hohen Gehalt an kristallinem Mullit und Korund, obwohl keine Tonerde verwendet wurde. Der Quarz ist vollständig in der aggressiven Schmelzphase in Lösung gegangen. Durch Röntgenspektroskopie war kein Quarz mehr nachweisbar.

### Beispiel 3:

Es wird der Einfluß der Sintertemperatur auf die Gefügezusammensetzung des Bauxit-Porzellans Masse VI untersucht. Die Ergebnisse sind in Tabelle 8 zusammengestellt.

**Tab. 9:**

| Quantitative Phasengehalte von Bauxit-Porzellan mit 56, 8 % Bauxit (Masse VI) bei unterschiedlicher Brenntemperatur | | | | |
|---|---|---|---|---|
| Probe | Gehalte, Gew.-% | | | |
| | Glasphase | Quarz | Korund | Mullit |
| Bauxit 1190°c | 44 ± 2 | 0, 8 ± 0, 5 | 43 ± 1 | 12 ± 1 |
| Bauxit 1225°C | 46 ± 2 | 0, 5 ± 0,5 | 39 ± 1 | 14, 5 ± 1 |
| Bauxit 1340°C | 46, 5 ± 2 | < 0,4 | 32 ± 1 | 21, 5 ± 1 |

Es wird klar ersichtlich, daß die Sintertemperatur einen maßgeblichen Einfluß auf den Korund-Gehalt im Gefüge und damit auf die mechanische Festigkeit des Porzellans hat. So nimmt der Korund-Gehalt bei einer Erhöhung der Sintertemperatur von 1190 °C auf 1340 °C von 43 Gew.-% auf 32 Gew.-% ab.

## Patentansprüche

1. Verfahren zur Herstellung eines Porzellans, wobei calcinierter Bauxit (CB), Ton (T) mit einem Anteil von mehr als 5 Gew.-% an eingelagerten Fremdmetalloxiden, Kaolin (K) mit einem Anteil von mehr als 5 Gew.-% an eingelagerten Fremdmetalloxiden, Feldspat(F), Magnesiumsilikat (M) gemischt, gemahlen und zu einer Aufschlämmung verarbeitet werden, die Aufschlämmung zu einer formbaren Ausgangsmasse weiterverarbeitet wird und die Ausgangsmasse getrocknet und abschließend zum Porzellan gesintert wird, wobei, bezogen auf das Gesamtgewicht, 48 bis 58 Gew.-% calciniertes_Bauxit (CB), 10 bis 20 Gew.-% eines Tons (T), welcher reich an Wechsellagen-Tonmineralien ist, 4 bis 12 Gew.-% illitischer Ton (T), 7 bis 15 Gew.-% Feldspat (F), 0.5 bis 3 Gew.-% Magnesiumsilikat (M), 8 bis 16 Gew.-% eines Kaolins (K), welcher reich an Wechsellagen-Tonmineralien ist, und 8 bis 16 Gew.-% illitreicher Kaolin (K) miteinander vermischt werden.

2. Verfahren nach Anspruch 1, wobei die Fremdmetalloxide ausgewählt sind aus der Gruppe, die aus Fe₂O₃, MgO, K₂O, Na₂Ound CaO besteht.

3. Verfahren nach Anspruch 1 oder 2, wobei ein calciniertes Bauxit (CB) mit einem Anteil zwischen 80 und 90 Gew.-% Al₂O₃ verwendet wird.

4. Verfahren nach einem der vorhergehenden Ansprüche, wobei als Feldspat (F) ein Nephelin-Syenit verwendet wird.

5. Verfahren nach einem der vorhergehenden Ansprüche, wobei als Magnesiumsilikat (M) Speckstein verwendet wird.

6. Verfahren nach einem der vorhergehenden Ansprüche, wobei der calcinierte Bauxit (CB) separat oder zusammen mit einem Anteil des Tons (T) vorgemahlen wird.

7. Verfahren nach einem der vorhergehenden Ansprüche, wobei die Ausgangsmasse bei einer Temperatur zwischen 1150 und 1300 °C gesintert wird.

8. Verfahren nach Anspruch 7, wobei die Ausgangsmasse bei einer Temperatur zwischen 1190 und 1220 °C gesintert wird.

9. Verfahren nach einem der vorhergehenden Ansprüche, wobei der Abkühlprozess nach dem Sintern durch Verwendung von Kaltluft beschleunigt wird.

10. Porzellan, erhältlich durch ein Verfahren gemäß einem der Ansprüche 1 bis 9.

11. Porzellan nach Anspruch 10 umfassend 12 bis 21 Gew.-% Mullit (A1), 30 bis 46 Gew.-% Korund (B), 40 bis 50 Gew.-% Glasphase (A2) und 0 bis 2 Gew.-% Quarz (D).

12. Porzellan nach Anspruch 11, umfassend 12 bis 15 Gew.-% Mullit (A1), 38 bis 46 Gew.-% Korund (B), 44 bis 47 Gew.-% Glasphase (A2) und 0 bis 1 Gew.-% Quarz (D).

13. Porzellan nach Anspruch 11 oder 12, wobei die Korngröße der eingelagerten Quarzpartikel (D) 20 bis 40 µm beträgt, und wobei in einem Querschnitt weniger als 10 Quarzpartikel (D) pro mm² vorliegen.

14. Keramischer Isolator (40), insbesondere zur Isolation von Hochspannung, mit einer Isoliermasse aus einem Porzellan (41) gemäß einem der Ansprüche 10 bis 13.

## Claims

1. Process for producing a porcelain, in which calcined bauxite (CB), clay (T) which contains more than 5% by weight of foreign metal oxide inclusions, kaolin (K) which contains more than 5% by weight of foreign metal oxide inclusions, feldspar (F) and magnesium silicate (M) are mixed, milled and processed into a slurry, the slurry is processed further to form a shapeable starting compound, and the starting compound, is dried and finally sintered to produce the porcelain, in which, based on the total weight, from 48 to 58% by weight of calcined bauxite (CB), from 10 to 20% by weight of a clay (T) which is rich in mixed layer clay minerals, from 4 to 12% by weight of illitic clay (T), from 7 to 15% by weight of feldspar (F), from 0.5 to 3% by weight of magnesium silicate (M), from 8 to 16% by weight of a kaolin (K) which is rich in mixed layer clay minerals, and from 8 to 16% by weight of illite-rich kaolin (K) are mixed with one another.

2. Process according to Claim 1, in which the foreign metal oxides are selected from the group consisting of Fe₂O₃, MgO, K₂O, Na₂O and CaO.

3. Process according to Claim 1 or 2, in which a calcined bauxite (CB) with an Al₂O₃ content of between 80 and 90% by weight is used.

4. Process according to one of the preceding claims, in which the feldspar (F) used is a nepheline-syenite.

5. Process according to one of the preceding claims, in which steatite is used as magnesium silicate (M).

6. Process according to one of the preceding claims, in which the calcined bauxite (CB) is premilled, separately or together with a proportion of the clay (T).

7. Process according to one of the preceding claims, in which the starting compound is sintered at a temperature of between 1150 and 1300°C.

8. Process according to Claim 7, in which the starting compound is sintered at a temperature of between 1190 and 1220°C.

9. Process according to one of the preceding claims, in which the cooling process after the sintering is accelerated by the use of cold air.

10. Porcelain obtainable using the process according to one of Claims 1 to 9.

11. Porcelain according to Claim 10, comprising from 12 to 21% by weight of mullite (A1), from 30 to 46% by weight of corundum (B), from 40 to 50% by weight of vitreous phase (A2) and from 0 to 2% by weight of quartz (D).

12. Porcelain according to Claim 11, comprising from 12 to 15% by weight of mullite (A1), from 38 to 46% by weight of corundum (B), from 44 to 47% by weight of vitreous phase (A2) and from 0 to 1% by weight of quartz (D).

13. Porcelain according to Claim 11 or 12, in which the grain size of the included quartz particles (D) is from 20 to 40 µm, and in which, in a cross section, there are fewer than 10 quartz particles (D) per mm².

14. Ceramic insulator (40), in particular for high-voltage insulation, having an insulating material made from the porcelain (41) according to one of Claims 10 to 13.

## Revendications

1. Procédé de préparation d'une porcelaine, où l'on mélange la bauxite calcinée (CB), l'argile (T) avec une proportion de plus de 5% en poids d'oxydes métalliques étrangers incorporés, le kaolin (K) avec une proportion de plus de 5% en poids d'oxydes métalliques étrangers incorporés, le feldspath (F), le silicate de magnésium (M), on broie et on traite en une suspension, la suspension est traitée en une masse de départ, moulable et la masse de départ est séchée et ensuite, frittée en porcelaine, où sur base du poids total, on mélange l'un avec l'autre, 48 à 58% en poids de bauxite calcinée (CB), 10 à 20% en poids d'une argile (T), qui est riche en minéraux d'interstratification, 4 à 12% en poids d'argile illitique (T), 7 à 15% en poids de feldspath (F), 0,5 à 3% en poids de silicate de magnésium (M), 8 à 16% en poids d'un kaolin (K), qui est riche en minéraux d'interstratification, et 8 à 16% en poids d'un kaolin riche en illite (K).

2. Procédé selon la revendication 1, où les oxydes métalliques étrangers sont choisis parmi le groupe qui consiste en Fe₂O₃, MgO, K₂O, Na₂O et CaO.

3. Procédé selon la revendication 1 ou 2, où l'on utilise une bauxite calcinée (CB) avec une proportion de 80 à 90% en poids de Al₂O₃.

4. Procédé selon l'une des revendications précédentes, où comme feldspath (F), on utilise une néphéline-syénite.

5. Procédé selon l'une des revendications précédentes, où comme silicate de magnésium (M), on utilise la pierre de lard.

6. Procédé selon l'une des revendications précédentes, où la bauxite calcinée (CB) est prébroyée séparément ou avec une partie de l'argile (T).

7. Procédé selon l'une des revendications précédentes, où la masse de départ est frittée à une température allant de 1150 à 1300°C.

8. Procédé selon la revendication 7, où la masse de départ est frittée à une température allant de 1190 à 1220°C.

9. Procédé selon l'une des revendications précédentes, où le processus de refroidissement après le frittage est accéléré par utilisation d'air froid.

10. Porcelaine pouvant être obtenue par un procédé selon l'une des revendications 1 à 9.

11. Porcelaine selon la revendication 10, comprenant 12 à 21% en poids de mullite (A1), 30 à 46% en poids de corindon (B), 40 à 50% en poids de phase vitreuse (A2) et 0 à 2% en poids de quartz (D).

12. Porcelaine selon la revendication 11, comprenant 12 à 15% en poids de mullite (A1), 38 à 46% en poids de corindon (B), 44 à 47% en poids de phase vitreuse (A2) et 0 à 1% en poids de quartz (D).

13. Porcelaine selon la revendication 11 ou 12, où la taille des grains des particules de quartz (D) incorporées se situe dans l'intervalle allant de 20 à 40 µm et où en coupe transversale, moins de 10 particules de quartz (D) par mm² sont présentes.

14. Isolateur céramique (40), en particulier pour l'isolation de la haute-tension, avec une masse isolante en une porcelaine (41) selon l'une des revendications 10 à 13.
